(19) Europäisches Patentamt

European Patent Office

Office européen des brevets

(11) Numéro de publication: **0 359 654**

A1

## (12) DEMANDE DE BREVET EUROPEEN

(21) Numéro de dépôt: **89402487.6**

(22) Date de dépôt: **12.09.89**

(51) Int. Cl.⁵: **B 62 D 11/18**
**F 16 H 47/00**

(30) Priorité: **14.09.88 FR 8811967**

(43) Date de publication de la demande:
**21.03.90 Bulletin 90/12**

(84) Etats contractants désignés: **DE ES GB IT**

(71) Demandeur: **SOCIETE D'EQUIPEMENTS, SYSTEMES ET MECANISMES**
**Zone Industrielle d'Epluches Le Clos des Borgnes B.P. 32**
**F-95310 Saint-Ouen-l'Aumone (FR)**

(72) Inventeur: **Leboime, Pierre**
**44, avenue Gabriel**
**F-75008 Paris (FR)**

(74) Mandataire: **Martin, Jean-Jacques et al**
**Cabinet REGIMBEAU 26, Avenue Kléber**
**F-75116 Paris (FR)**

(54) Transmission pour véhicules chenillés rapides ou à roues non directrices.

(57) L'invention concerne une transmission pour véhicules chenillés rapides ou à roues non directrices, comportant une boîte de vitesses à convertisseur de couple hydrocinétique fonctionnant en dérivation de puissance, des éléments de direction à variation continue du rayon de virage, et un inverseur de marche associé à des trains planétaires de sortie.

Selon l'invention, la transmission (1) est associée à un moteur d'entraînement (3) dont la puissance est essentiellement constante sur une large plage de vitesses ; de plus, le secondaire (8) du convertisseur de couple hydrocinétique (5) est relié à l'arbre de sortie (10) de la boîte de vitesses par l'intermédiaire d'un crabot (22) ; enfin, les éléments de direction sont attaqués par deux roues libres (25, 29), dont l'une (25) est entraînée par le moteur d'entraînement (3), et dont l'autre (29) est entraînée par le primaire (6) du convertisseur de couple hydrocinétique (5), de façon à assurer en permanence le choix de la vitesse d'entraînement la plus rapide.

Application notamment aux transmissions de chars.

FIG_1

Bundesdruckerei Berlin

Description

## TRANSMISSION POUR VEHICULES CHENILLES RAPIDES OU A ROUES NON DIRECTRICES.

La présente invention concerne le domaine des transmissions pour véhicules chenillés rapides ou à roues non directrices.

Les véhicules chenillés rapides, en général destinés à des usages militaires, doivent autant que faire se peut être à la fois capables de se déplacer sur route le plus rapidement possible, de franchir les obstacles les plus sévères, et de conserver en toutes circonstances la plus grande mobilité ou "agilité".

Ces véhicules doivent être capables de dépasser largement des vitesses de 60 km/h, et atteindre même 80 km/h, ce qui les différencie des autres véhicules chenillés tels que ceux utilisés dans le domaine des travaux publics, lesquels n'ont en général pas à se déplacer aussi rapidement.

Dans les deux cas, le virage du véhicule repose sur le principe général selon lequel il faut faire varier la vitesse des chenilles l'une par rapport à l'autre, mais on comprend aisément que les transmissions utilisées ne se conçoivent pas de la même façon, en raison des conditions infiniment plus sévères qui prévalent au virage de véhicules chenillés rapides du fait des puissances importantes qui circulent entre les chenilles. Pour les engins de terrassement, ces puissances restent en tout état de cause relativement modestes.

Par ailleurs, la précision de la conduite à grande vitesse nécessite une direction à variation continue du rayon de virage.

C'est pour ces raisons que l'on tend de plus en plus à utiliser, pour la direction des engins modernes, et notamment des chars, des transmissions hydrostatiques, en particulier des transmissions incluant une pompe à débit variable (pompe à pistons axiaux et à plateau inclinable, ou à barillet inclinable ou non) et un moteur hydraulique à cylindrée fixe. Leur montage est facilité par le fait que l'on peut utiliser la même huile pour cette transmission de direction et la boîte de vitesses, huile qui peut être la même que celle pour le moteur diesel.

On connaît ainsi des transmissions pour véhicules chenillés rapides ou à roues non directrices, comportant une boîte de vitesses à convertisseur de couple hydrocinétique fonctionnant en dérivation de puissance, des éléments de direction à variation continue du rayon de virage, et un inverseur de marche associé à des trains planétaires de sortie.

Plusieurs techniques ont en outre déjà été proposées, visant à améliorer les performances des transmissions connues, et on pourra utilement se référer aux demandes de brevet français N° 2 450 189 et N° 2 602 481, émanant du même inventeur que la présente demande, et incorporées ici à titre de références.

Dans la demande de brevet français N° 2 450 189, on a ainsi proposé d'utiliser un variateur de vitesse d'arbre de direction, dont le primaire est entraîné soit à partir du primaire du convertisseur de couple de la transmission, soit à partir du secondaire de ce convertisseur, selon celui de ces deux éléments qui tourne le plus vite, procurant ainsi au véhicule le rayon de virage minimal.

Dans la demande de brevet français N° 2 602 481, on a par ailleurs proposé de réaliser une transmission avec dispositif de direction à sortie unique : dans ce cas, la sortie de la boîte de vitesses est reliée à la couronne d'un premier train planétaire (à planétaire fixe, et à porte-satellites relié à la partie rotative du dispositif de freinage), et le dispositif de direction comporte un élément rotatif relié au planétaire d'un second train planétaire de même rapport (à porte-satellites solidaire de celui du premier train, et à couronne reliée à l'arbre de sortie de mouvement qui s'étend à travers les dispositifs de freinage et de direction).

L'état de la technique est également illustré par les brevets français N° 2 606 713, N° 2 540 058, N° 2 468 790, N° 2 395 873 et N° 2 377 923 émanant de la demanderesse, et par les brevets britanniques N° 1 456 717 et N° 2 006 899.

Parallèlement, de nombreuses recherches sont effectuées dans le domaine des moteurs d'entraînement, et plus particulièrement sur les moteurs diesels suralimentés.

On cherche notamment à développer des turbines avec chambre de combustion séparée, entraînant un compresseur (système hyperbar) : ces solutions semblent cependant être encore d'un coût prohibitif. De façon plus prometteuse, on cherche aussi à utiliser des moteurs diesels 2 temps : il semble en particulier possible, en agissant convenablement sur les soupapes d'échappement, d'effectuer une importante suralimentation grâce à une plus forte pression des gaz d'échappement vers la turbine de suralimentation, et ce même aux bas régimes, ce qui aboutit à une puissance constante depuis des vitesses de l'ordre de la moitié de la vitesse maximale.

L'invention a pour objet de réaliser une transmission qui soit particulièrement bien adaptée aux moteurs fournissant une puissance constante dans une large plage de vitesses, par exemple dans le rapport de 1 à 2.

L'invention a aussi pour objet de réaliser une transmission dont la conception soit à la fois simple et robuste, et permette de réduire le nombre des rapports tout en améliorant les performances du véhicule l'utilisant.

L'invention a également pour objet de réaliser une transmission permettant, outre les deux positions de point mort et de point mort freiné, de réaliser trois modes de fonctionnement, dont le premier est à dérivation de puissance, le deuxième est une prise directe, et le troisième réalise une surmultiplication.

Il s'agit plus particulièrement d'une transmission pour véhicules chenillés rapides ou à roues non directrices, comportant une boîte de vitesses à convertisseur de couple hydrocinétique fonctionnant en dérivation de puissance, des éléments de direction à variation continue du rayon de virage, et un inverseur de marche associé à des trains planétaires de sortie, caractérisée par le fait que :
. la transmission est associée à un moteur d'entraînement dont la puissance est essentiellement constante sur une large plage de vitesses ;
. le secondaire du convertisseur de couple hydrocinétique est relié à l'arbre de sortie de la boîte de vitesses par l'intermédiaire d'un crabot ;
. les éléments de direction sont attaqués par deux roues libres, dont l'une est entraînée par le moteur d'entraînement, et dont l'autre est entraînée par le primaire du convertisseur de couple hydrocinétique, de façon à assurer en permanence le choix de la vitesse d'entraînement la plus rapide.

De préférence, la boîte de vitesses comporte un train planétaire à l'entrée du convertisseur de couple hydrocinétique pour la division de puissance, le rapport dudit train planétaire étant choisi voisin de 2 : ceci est tout à fait favorable pour que le moteur d'entraînement fonctionne à puissance constante sur toute la gamme de vitesses du véhicule (à titre indicatif, on peut observer que la raison des boîtes de vitesses des transmissions classiques à convertisseur de couple hydrocinétique, entre deux rapports consécutifs, est de l'ordre de 1,6).

Plus particulièrement, le train planétaire est du type à deux familles de satellites engrenant ensemble, dont l'une engrène avec la couronne du train planétaire reliée au moteur d'entraînement, et dont l'autre engrène avec le planétaire dudit train relié à l'arbre de sortie de la boîte de vitesses, le porte-satellites sur lequel sont situés lesdits satellites entraînant le primaire du convertisseur de couple hydrocinétique.

Il est par ailleurs particulièrement intéressant de prévoir que le primaire du convertisseur de couple hydrocinétique peut être arrêté par un frein associé et/ou relié par un embrayage associé au secondaire dudit convertisseur de couple hydrocinétique.

Selon un mode de réalisation particulièrement avantageux, le crabot reliant le secondaire du convertisseur de couple hydrocinétique à l'arbre de sortie de la boîte de vitesses est associé à un dispositif d'actionnement de telle façon que ledit crabot reste toujours pris, sauf en cas de mode de fonctionnement purement mécanique correspondant à une surmultiplication au cours de laquelle ledit frein associé est mis tandis que ledit embrayage associé est désengagé : une telle structure est à la fois simple et robuste, et elle permet notamment, grâce aux dispositifs de détection de synchronisme modernes, de se passer d'un embrayage (onéreux) ou d'une roue libre supplémentaire (supprimant le frein moteur).

Il est par ailleurs avantageux que les éléments de direction à variation continue du rayon de virage comportent un variateur de vitesse. Plus particulièrement, le variateur de vitesse est réalisé sous la forme d'une transmission hydrostatique connue en soi, constituée par une pompe à débit variable et un moteur hydraulique à cylindrée fixe, l'arbre d'entraînement de ladite pompe étant attaqué par les deux roues libres de la transmission montées sur celui-ci, tandis que ledit moteur hydraulique entraîne un arbre de direction agissant sur les trains planétaires de sortie. Une telle solution permet d'éviter de trop alourdir la transmission (un système électrique serait plus lourd à puissance égale que le système précité à pompe et moteur hydraulique).

De préférence, l'inverseur de marche relié d'une part à l'arbre de sortie de la boîte de vitesses, et d'autre part aux trains planétaires de sortie, est constitué par une trilogie conique, ce qui permet d'aboutir à une structure à la fois compacte et robuste ; plus particulièrement, l'inverseur de marche est relié à chaque train planétaire de sortie par deux crabots, l'un de marche avant l'autre de marche arrière.

Il est par ailleurs particulièrement avantageux de prévoir que la transmission comporte un embrayage d'entraînement dont le primaire est entraîné par l'arbre d'entrée de la transmission, et dont le secondaire entraîne la couronne du train planétaire de la boîte de vitesses, ledit embrayage d'entraînement pouvant être relâché en position de point mort, freiné ou non, ou de sélection du sens de marche, indépendamment de l'actionnement du frein et/ou de l'embrayage associés au primaire du convertisseur de couple hydrocinétique et des crabots reliant la boîte de vitesses à l'inverseur de marche d'une part et l'inverseur de marche aux trains planétaires de sortie d'autre part.

D'autres caractéristiques et avantages de l'invention apparaîtront plus clairement à la lumière de la description qui va suivre et des dessins annexés, concernant un mode de réalisation particulier, où :
- la figure 1 est une représentation schématique d'une transmission conforme à l'invention, sur laquelle les sous-ensembles fonctionnels sont indiqués par des blocs en traits mixtes,
- la figure 2 est une vue partielle de la figure 1, illustrant le sous-ensemble I correspondant à la boîte de vitesses de la transmission,
- la figure 3 est une autre vue partielle illustrant le sous-ensemble II correspondant aux éléments de direction,
- la figure 4 est une autre vue partielle illustrant le sous-ensemble III correspondant à l'inverseur de marche, et les sous-ensembles associés IV et IV′ correspondant aux trains planétaires de sortie.

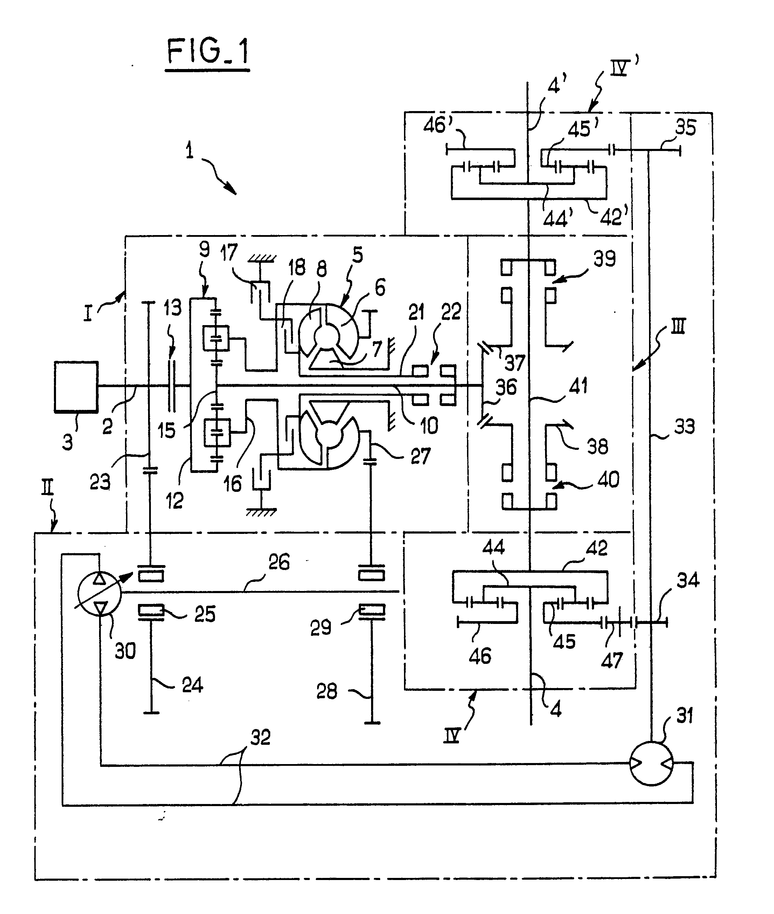

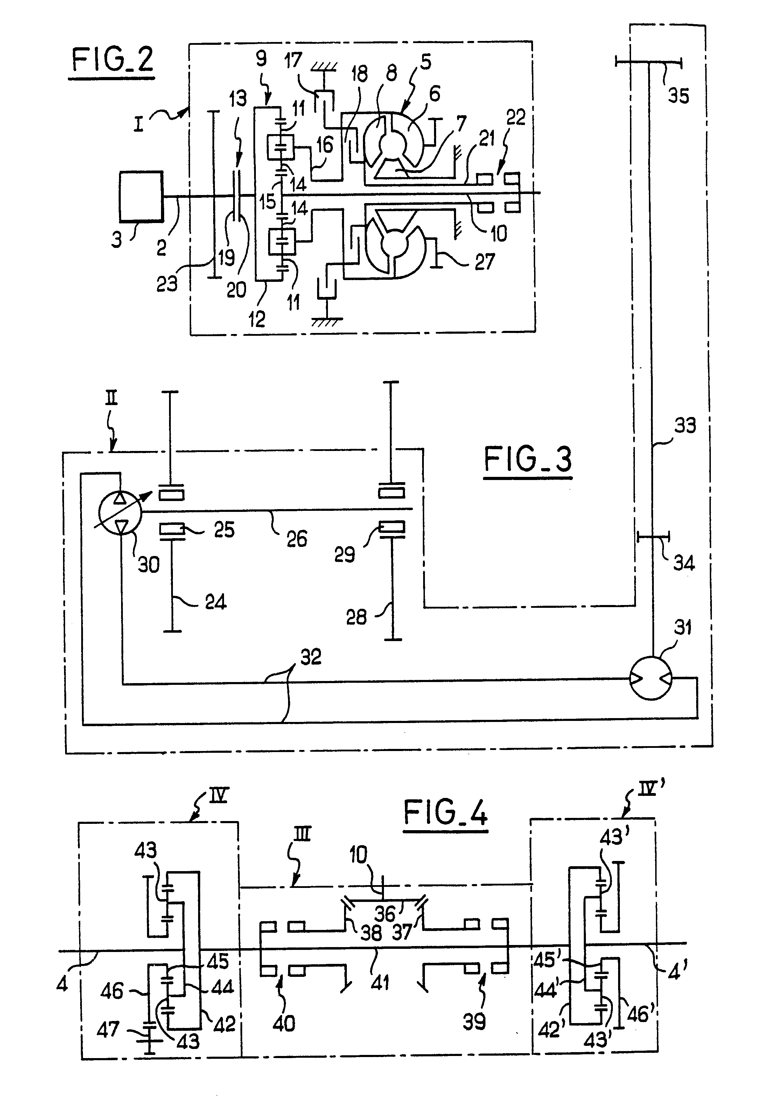

La transmission 1 illustrée en figure 1 a été, pour des raisons de clarté et de logique, partagée en différents sous-ensembles fonctionnels I, II, III, IV et IV′ qui seront décrits successivement, en se référant aux figures 2, 3 ou 4 correspondantes, depuis l'arbre d'entrée 2 de la transmission relié au moteur d'entraînement 3 du véhicule, jusqu'aux arbres de sortie 4, 4′ reliés aux roues d'entraînement des chenilles dudit véhicule.

Il est à noter que les différents organes constitutifs de la transmission sont séparément bien connus de l'homme de l'art, de sorte qu'ils ne seront décrits que succinctement.

Ainsi que cela ressort des figures, la boîte de vitesses de la transmission 1 est de conception particulièrement simple, ce qui résulte en partie du fait que le moteur d'entraînement 3 est un moteur fournissant une puissance essentiellement constante sur une large plage de vitesses, par exemple dans le rapport de 1 à 2.

L'agencement de cette transmission permet de réduire le nombre des rapports de la boîte de vitesses, et d'améliorer les performances du véhicule. En effet, si la raison de la boîte de vitesses entre deux rapports consécutifs est voisine de 2, le moteur d'entraînement 3 fonctionne à puissance constante sur toute la gamme de vitesses du véhicule, notamment jusqu'à des vitesses atteignant 80 km/h.

Le sous-ensemble I comporte un convertisseur de couple hydrocinétique 5, afin d'assurer le démarrage du véhicule et la multiplication du couple nécessaire aux basses vitesses. Il est rappelé que le type de véhicule concerné par la transmission de l'invention implique une ouverture de transmission dont la valeur est environ de 10 (rapport entre l'effort de traction possible au démarrage et celui à vitesse maximale).

Le convertisseur hydrocinétique 5 illustré ici est certes de conception connue, mais son mode d'utilisation diffère sensiblement de celui des transmissions existantes, ainsi qu'on le verra plus loin.

La représentation schématique du convertisseur de couple hydrocinétique 5 permet de distinguer un primaire 6 (pompe), un ensemble d'aubages de réaction 7, et un secondaire 8 (turbine), le couple de sortie étant la somme des couples d'entrée et de réaction.

On cherche à utiliser, en premier mode, le principe connu de la division de puissance à l'entrée du convertisseur de couple hydrocinétique 5, associé au fait que le moteur d'entraînement, à puissance constante, doit tourner sensiblement à la moitié de sa vitesse (mais déjà à puissance maximale). Il s'agit donc de multiplier par 2 environ la vitesse du convertisseur 5, lequel doit ainsi tourner à sa vitesse nominale. Pour cela, on utilise un moyen du type différentiel avec un rapport 2. On pourrait certes utiliser un différentiel conique, mais il est plus simple de prévoir un train planétaire à deux familles de satellites engrenant ensemble, dont une famille engrène avec la couronne reliée au moteur d'entraînement, et l'autre famille avec le planétaire relié à la sortie de la boîte de vitesses.

On a représenté ici une transmission 1 comportant un train planétaire 9 du type précité. Les organes constitutifs du train planétaire 9 n'ont pas été référencés sur la figure 1 pour des besoins de clarté, à l'exception de l'arbre de sortie 10 entraîné par ledit train planétaire. Il convient donc de se référer à la figure 2, sur laquelle on distingue des satellites 11 d'une première famille, engrenant avec la couronne 12 qui est reliée au moteur d'entraînement (par l'intermédiaire d'un embrayage d'entraînement 13 comme on le verra par la suite) ; on distingue également des satellites 14 d'une deuxième famille, engrenant avec le planétaire 15 qui est relié à l'arbre de sortie 10. Les deux familles de satellites 11, 14 engrenant ensemble, sont situées sur un porte-satellites 16 qui est relié, pour son entraînement, au primaire 6 du convertisseur de couple hydrocinétique 5.

Il est en outre prévu un frein 17 sur la prise de force, par exemple un frein à mâchoires ou à disques multiples, capable d'arrêter le primaire 6 du convertisseur de couple hydrocinétique, ainsi qu'un embrayage 18, par exemple un embrayage à disques, capable de relier le primaire 6 à la turbine constituant le secondaire 8 dudit convertisseur. Il convient de noter que le frein 17 et l'embrayage 18 précités peuvent être actionnés séparément, de sorte que le primaire 6 du convertisseur peut être arrêté par le frein associé 17 et/ou relié au secondaire 8 par l'embrayage associe 18. Il en va d'ailleurs de même pour l'embrayage d'entraînement 13, dont le primaire 19 est entraîné par l'arbre d'entrée 2, et dont le secondaire 20 entraîne la couronne 12 du train planétaire 9. Ceci ressortira encore plus clairement des explications données plus loin en rapport avec le fonctionnement de la transmission.

Selon un aspect essentiel de la transmission de l'invention, le secondaire 8 du convertisseur de couple hydrocinétique 5 est relié à l'arbre de sortie 10 par l'intermédiaire d'un crabot : on distingue sur les figures 1 et 2 la liaison entre l'arbre de sortie 10 et un arbre coaxial 21 solidaire du secondaire 8, assurée ainsi par un crabot 22.

Le crabot 22 sera associé à tout dispositif d'actionnement connu (mécanique, hydraulique ou pneumatique), de telle façon qu'il reste toujours pris, sauf lors du troisième mode de fonctionnement, purement mécanique, correspondant à un mode surmultiplié, au cours duquel le frein 17 est mis, mais l'embrayage 18 est relâché, ainsi que cela sera expliqué plus en détail avec le fonctionnement général de la transmission.

Une telle liaison par crabot est particulièrement avantageuse, car elle permet de simplifier la conception d'ensemble, en se passant d'éléments tels qu'un embrayage (onéreux) ou une roue libre (supprimant le frein moteur), en faisant tout simplement appel aux dispositifs modernes de détection de synchronisme qui sont très performants ; on peut en outre disposer d'un frein moteur bien utile en premier et deuxième mode de fonctionnement (voir plus loin les explications concernant les différents modes de fonctionnement).

On parvient ainsi à n'utiliser en fait que deux éléments glissants (le frein 17 et l'embrayage 18 associés au convertisseur hydrocinétique 5), ce qui est très avantageux pour la simplification et la fiabilité du système.

Un autre aspect fondamental de l'invention réside dans la liaison d'entraînement des éléments de direction à variation continue du rayon de virage.

Il convient d'ailleurs de noter que les éléments de direction, représentés par le sous-ensemble II sur les figures 1 et 3, comportent ici un variateur de vitesse qui est réalisé sous la forme d'une transmission hydrostatique classique, constituée par une pompe à débit variable et un moteur hydraulique à cylindrée fixe : il ne s'agit cependant que d'un exemple préféré, étant entendu que l'on pourra utiliser un système électrique avec génératrice et moteur (on aboutit cependant dans l'état actuel de la technique à des structures nettement plus lourdes).

L'originalité de la transmission de l'invention réside en fait dans l'agencement de la liaison entre les sous-ensembles I et II, ainsi que décrit ci-après.

On distingue ainsi, sur l'arbre d'entrée 2, un engrenage 23 coopérant avec un engrenage 24 monté, par l'intermédiaire d'une première roue libre 25, sur un arbre 26 servant à entraîner la pompe à débit variable des éléments de direction (pompe 30) : ceci permet une attaque des éléments de direction par une première roue libre 25 qui est entraînée par le moteur 3. On distingue également un engrenage 27 solidaire du primaire 6 du convertisseur de couple hydrocinétique 5, et coopérant avec un engrenage 28 également monté, par l'intermédiaire d'une deuxième roue libre 29, sur l'arbre 26 d'entraînement de la pompe 30 : ceci permet donc aussi une attaque des éléments de direction par une deuxième roue libre 29 qui est entraînée par le primaire 6 du convertisseur de couple hydrocinétique, lequel primaire est lié au porte-satellites du train planétaire d'entrée 9.

Une telle disposition permet ainsi d'assurer en permanence, pour les éléments de direction, le choix de la vitesse d'entraînement la plus rapide.

La combinaison des caractéristiques essentielles précitées (association à un moteur de puissance essentiellement constante sur la plage de vitesses, crabotage du secondaire du convertisseur sur la sortie de la boîte de vitesses, et attaque des éléments de direction par deux roues libres entraînées pour l'une par le moteur et pour l'autre par le primaire du convertisseur) permet de réaliser une transmission convenant parfaitement aux véhicules chenillés tous terrains, en étant à la fois simple et robuste.

Les éléments de direction constitués par le sous-ensemble II comportent en outre, de façon classique, un circuit hydraulique 32 reliant la pompe à débit variable 30 au moteur hydraulique à cylindrée fixe 31. Le moteur hydraulique 31 entraîne ici un arbre de direction 33 agissant sur les planétaires des réducteurs de sortie (sous-ensembles IV et IV'), par l'intermédiaire d'engrenages associés tels que les engrenages 34 et 35.

Ainsi qu'on peut le voir sur les figures 1 et 4, la transmission est par ailleurs complétée par un inverseur de marche (sous-ensemble III) et par deux trains planétaires de sortie (sous-ensembles IV et IV'), de façon tout à fait classique.

L'inverseur de marche est ici constitué par une trilogie 1 5 conique (engrenage 36 solidaire de l'arbre de sortie 10, et engrenages associés 37, 38). On pourrait cependant utiliser d'autres solutions, par exemple un ensemble conique associé à un inverseur à cinq pignons droits, mais la variante illustrée présente l'avantage de la simplicité.

L'inverseur de marche communique le mouvement à un arbre transversal associé 41 par tout moyen adéquat : ici, on a représenté un crabot 39 de marche avant et un crabot 40 de mouvement inverse, mais on pourrait à la rigueur utiliser des embrayages à la place de ces crabots.

L'arbre 41 est relié aux deux trains planétaires de sortie, de façon classique.

Le train représenté par le sous-ensemble IV comporte, comme indiqué sur la figure 4, une couronne 42 liée à l'arbre 41, une famille de satellites 43 situés sur un porte-satellites 44 lui-même relié à l'arbre de sortie 4. Le planétaire 45 du train de sortie porte un engrenage 46 relié, ici par l'intermédiaire d'un engrenage 47, à l'arbre de direction 33. Le train représenté par le sous-ensemble IV', est identique (au pignon 47 près), de sorte que ses organes constitutifs ont été affectés des mêmes références avec un prime.

Avant de décrire plus en détail le fonctionnement de la transmission conforme à l'invention, avec ses différents modes et les passages de l'un à l'autre, il convient d'observer que l'embrayage d'entraînement 13, dont le primaire est entraîné par l'arbre d'entrée 2 et dont le secondaire entraîne la couronne du train planétaire de la boîte de vitesses, peut être relâché en position de point mort (freiné ou non), ou de sélection du sens de marche, indépendamment de l'actionnement du frein 17 et/ou de l'embrayage 18 associés au primaire du convertisseur hydrocinétique 5, et de l'actionnement du crabot 22 d'une part (reliant la boîte de vitesses à l'inverseur de marche), et des crabots 39, 40 d'autre part (reliant l'inverseur de marche aux trains planétaires de sortie).

Examinons maintenant les différentes situations possibles.

**Point mort**

Dans cette position, l'embrayage d'entraînement 13 est relâché, de même que l'embrayage 18 et le frein 17 associés au convertisseur hydrocinétique 5 ; les crabots 39, 40 sont ouverts, mais par contre le crabot 22 est pris.

Ainsi, à l'exception du crabot 22, tous les éléments de la transmission sont ouverts en position de point mort.

**Point mort freiné**

Il s'agit d'une situation spécifique aux véhicules chenillés tels que les chars : c'est elle qui permet d'effectuer un virage du char sur lui-même, selon un mouvement de pivotement autour d'un axe vertical médian.

Dans cette position, tous les éléments sont pris, à l'exception naturellement de l'embrayage d'entraînement 13, afin d'immobiliser parfaitement l'arbre 41 : l'embrayage 18 et le frein 17 associés au convertisseur hydrocinétique 5 sont pris, le crabot 22 reste pris, et l'un ou l'autre des crabots de sens de marche 39 ou 40 est enclanché. Le véhicule tourne alors aisément sur lui-même en utilisant la direction qui est entraînée par l'arbre 2 (sans que la boîte de vitesses arrêtée par le frein 17 soit entraînée, puisque l'embrayage d'entraînement 13 est ouvert).

La manoeuvre est aisée et souple, et ce même en cas de plan porteur en dévers.

**Inversion du sens de marche ou choix (à partir du point mort) du sens de marche**

Les éléments de la transmission sont dans la même position que précédemment.

En effet, à l'arrêt du véhicule, la manoeuvre "point mort freiné" s'enclanche rapidement, et l'un des crabots 39 ou 40 est alors enclanché, selon le sens de marche désiré, l'autre crabot lâchant si il était précédemment en prise.

Il en va de même lorsqu'il s'agit d'inverser le sens de marche.

## Premier mode

A partir du point mort, et une fois le sens de marche choisi, on passe en premier mode.

Dans cette situation, l'embrayage d'entraînement 13 est actionné ; le crabot 22 reste pris, alors que l'embrayage 18 et le frein 17 associés au convertisseur hydrocinétique 5 sont relâchés. Le crabot 39 ou 40 correspondant au sens de marche déjà choisi reste naturellement enclanché.

La boîte de vitesses fonctionne alors en division de puissance hydrocinétique grâce au convertisseur, ce qui assure le démarrage du véhicule et la multiplication du couple nécessaire aux basses vitesses. Avec la dérivation de puissance, le moteur peut évoluer entre la moitié de sa vitesse maximale (par exemple 1 200 tours/min.), et une vitesse approchant la vitesse maximale et dépendant essentiellement des caractéristiques du convertisseur (soit 2 200 à 2 300 tours/min. environ).

Ainsi dans le premier mode, lors du démarrage du véhicule, le convertisseur est entraîné dans le rapport de multiplication (voisin de 2) fourni par le train planétaire d'entrée, dont le planétaire démarre avec le véhicule ; le moteur est alors chargé par le convertisseur, et est maintenu, au départ à mi-vitesse.

Au fur et à mesure de l'accélération du véhicule, le moteur peut tourner de plus en plus vite, alors que le primaire du convertisseur tourne sensiblement à la même vitesse (par exemple 2 600 à 3 000 tours/min.).

Compte tenu du mode d'entraînement par roues libres des éléments de direction, ces éléments sont dans le cas du premier mode entraînés par le couple d'engrenages 27, 28 et la roue libre 29, car ce sont naturellement les organes qui tournent le plus vite.

Si on le souhaite, on peut actionner la prise directe du convertisseur pour passer en deuxième mode, afin de ramener le moteur à mi-vitesse environ.

## Deuxième mode

Le deuxième mode de fonctionnement correspond à une prise directe, le convertisseur hydrocinétique ne participant plus à la transmission.

Dans cette situation, l'embrayage d'entraînement 13 est naturellement toujours actionné, et les crabots 22 d'une part, et 39 ou 40 (selon le cas) d'autre part, restent pris ; la différence par rapport au mode précédent réside dans l'actionnement de l'embrayage 18 associé au convertisseur, qui effectue un "pontage" dudit convertisseur (le frein 17 reste encore relâché).

Ce mode de fonctionnement est purement mécanique, car le convertisseur hydrocinétique 5 tourne en bloc avec le moteur.

Les éléments de direction sont dans ce cas entraînés par les deux roues libres 25 et 29.

A la fin du deuxième mode, le moteur aura à nouveau atteint sa vitesse maximale.

Pour la montée des rapports, le passage du premier au deuxième mode se fait par le seul actionnement de l'embrayage 18, qui annule le glissement du convertisseur, et ramène le moteur à la moitié de sa vitesse maximale. Le point de passage sera choisi en fonction des caractéristiques du convertisseur, pour faire en sorte que le moteur soit bien à mi-vitesse.

Inversement, en rétrogradant, le passage du deuxième au premier mode se fait aisément en relâchant simplement l'embrayage 18 (le passage du premier mode en deuxième mode et inversement est en effet de type powershift, c'est-à-dire sans interruption de l'effort de traction).

## Troisième mode

Le troisième mode de fonctionnement correspond à un mode purement mécanique dit surmultiplié, en profitant du fait que le train planétaire d'entrée 9 présente un rapport voisin de 2. Le moteur peut reprendre de la vitesse, et entraîner le véhicule à sa vitesse maximale.

Dans cette situation, l'embrayage d'entraînement 13 est toujours actionné, par contre l'embrayage 18 associé au convertisseur est relâché et le frein 17 est mis. Le crabot 39 ou 40 reste pris, mais par contre le crabot 22 est ouvert.

La couronne du train planétaire d'entrée 9 est arrêtée par le frein 17, ce qui permet d'arrêter l'entrée du convertisseur hydrocinétique 5 dont le secondaire est désolidarisé de la sortie de la transmission du fait de l'ouverture du crabot 22.

Les éléments de direction sont dans ce cas entraînés par le couple d'engrenages 23, 24 et la roue libre 25, car ce sont ces organes qui tournent le plus vite.

Le moteur, à nouveau revenu à la moitié de sa vitesse au moment du passage du deuxième au troisième mode, pourra avec ce mode surmultiplié doubler la vitesse du véhicule en remontant à sa vitesse maximale.

Pour la montée des rapports, le passage du deuxième au troisième mode se fait par desserrage de l'embrayage 18 et serrage du frein 17, ce qui a pour conséquence d'établir une raison voisine de 2, par le train planétaire d'entrée 9, entre l'arbre moteur 2 et l'arbre de sortie 10 : ceci ramène donc le moteur à la moitié de sa vitesse. En même temps, on a bien sûr ouvert le crabot 22 pour désolidariser la sortie du convertisseur hydrocinétique 5 de l'arbre de sortie 10 (en ne décrabotant pas, on freinerait le véhicule).

Inversement, pour rétrograder du troisième au deuxième mode, il suffit, après avoir lâché le frein 17 et enclanché l'embrayage 18, d'accélérer le moteur à sa vitesse maximale pour réaliser la synchronisation, et de recraboter alors le crabot 22. Dans la pratique, le contrôle de ladite synchronisation pourra se faire grâce au calculateur à microprocesseur gérant l'automatisme des changements de mode.

L'invention n'est pas limitée aux modes de réalisation qui viennent d'être décrits, mais englobe au contraire toute variante reprenant, avec des moyens équivalents, les caractéristiques essentielles figurant aux revendications. En particulier, on n'a décrit et représenté que les éléments actifs essentiels de la transmission de l'invention, mais il va de soi que, pour des raisons d'architecture ou de technologie, il sera possible de prévoir un ou plusieurs engrenages intermédiaires entre ces divers éléments.

**Revendications**

1. Transmission pour véhicules chenillés rapides ou à roues non directrices, comportant une boîte de vitesses à convertisseur de couple hydrocinétique fonctionnant en dérivation de puissance, des éléments de direction à variation continue du rayon de virage, et un inverseur de marche associé à des trains planétaires de sortie, caractérisée par le fait que :

. la transmission (1) est associée à un moteur d'entraînement (3) dont la puissance est essentiellement constante sur une large plage de vitesses ;

. le secondaire (8) du convertisseur de couple hydrocinétique (5) est relié à l'arbre de sortie (10) de la boîte de vitesses par l'intermédiaire d'un crabot (22) ;

. les éléments de direction sont attaqués par deux roues libres (25, 29), 1 5 dont l'une (25) est entraînée par le moteur d'entraînement (3), et dont l'autre (29) est entraînée par le primaire (6) du convertisseur de couple hydrocinétique (5), de façon à assurer en permanence le choix de la vitesse d'entraînement la plus rapide.

2. Transmission selon la revendication 1, caractérisée par le fait que la boîte de vitesses comporte un train planétaire (9) à l'entrée du convertisseur de couple hydrocinétique (5) pour la division de puissance, le rapport dudit train planétaire étant choisi voisin de 2.

3. Transmission selon la revendication 2, caractérisée par le fait que le train planétaire (9) est du type à deux familles de satellites (11, 14) engrenant ensemble, dont l'une (11) engrène avec la couronne (12) du train planétaire reliée au moteur d'entraînement (3), et dont l'autre (14) engrène avec le planétaire (15) dudit train relié à l'arbre de sortie (10) de la boîte de vitesses, le porte-satellites (16) sur lequel sont situés lesdits satellites entraînant le primaire (6) du convertisseur de couple hydrocinétique (5).

4. Transmission selon l'une des revendications 1 à 3, caractérisée par le fait que le primaire (6) du convertisseur de couple hydrocinétique (5) peut être arrêté par un frein associé (17) et/ou relié par un embrayage associé (18) au secondaire (8) dudit convertisseur de couple hydrocinétique.

5. Transmission selon les revendications 1 et 4, caractérisée par le fait que le crabot (22) reliant le secondaire (8) du convertisseur de couple hydrocinétique à l'arbre de sortie (10) de la boîte de vitesses est associé à un dispositif d'actionnement de telle façon que ledit crabot reste toujours pris, sauf en cas de mode de fonctionnement purement mécanique correspondant à une surmultiplication au cours de laquelle ledit frein associé (17) est mis tandis que ledit embrayage associé (18) est désengagé.

6. Transmission selon l'une des revendications 1 à 5, caractérisée par le fait que les éléments de direction à variation continue du rayon de virage comportent un variateur de vitesse (30, 31).

7. Transmission selon la revendication 6, caractérisée par le fait que le variateur de vitesse est réalisé sous la forme d'une transmission hydrostatique connue en soi, constituée par une pompe à débit variable (30) et un moteur hydraulique à cylindrée fixe (31), l'arbre d'entraînement (26) de ladite pompe étant attaqué par les deux roues libres (25, 29) de la transmission montées sur celui-ci, tandis que ledit moteur hydraulique entraîne un arbre de direction (33) agissant sur les trains planétaires de sortie.

8. Transmission selon l'une des revendications 1 à 7, caractérisée par le fait que l'inverseur de marche relié d'une part à l'arbre de sortie (10) de la boîte de vitesses, et d'autre part aux trains planétaires de sortie, est constitué par une trilogie conique (36, 37, 38).

9. Transmission selon la revendication 8, caractérisée par le fait que l'inverseur de marche est relié à chaque train planétaire de sortie par deux crabots associés (39, 40), l'un de marche avant et l'autre de marche arrière.

10. Transmission selon les revendications 1 à 4 et 9, caractérisée par le fait qu'elle comporte un embrayage d'entraînement (13) dont le primaire est entraîné par l'arbre d'entrée (2) de la transmission, et dont le secondaire entraîne la couronne (12) du train planétaire (9) de la boîte de vitesses, ledit embrayage d'entraînement pouvant être relâché en position de point mort, freiné ou non, ou de sélection du sens de marche indépendamment de l'actionnement du frein (17) et/ou de l'embrayage (18) associés au primaire du convertisseur de couple hydrocinétique et des crabots (22 ; 39 ; 40) reliant la boîte de vitesses à l'inverseur de marche d'une part et l'inverseur de marche aux trains planétaires de sortie d'autre part.

# FIG_1

FIG.2

FIG.3

FIG.4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A,D | GB-A-1 456 717 (ZAHNRADFABRIK FRIEDRICHSHAFEN) <br> * Page 2, ligne 45 - page 3, ligne 29; figure * | 1,4,6,7 | B 62 D 11/18 <br> F 16 H 47/00 |
| A,D | FR-A-2 450 189 (LEBOIME et al.) <br> * Revendication 2; figure * | 1 | |
| A,D | FR-A-2 602 481 (SOMA et al.) <br> * Revendications; figure * | 2,3 | |
| A,D | GB-A-2 006 899 (DAVID BROWN GEAR IND. LTD) <br> * Page 1, lignes 97-122; figure * | 1,4 | |
| A,D | FR-A-2 540 058 (SOMA et al.) <br> * Revendication 1; figure 1 * | 6,7 | |
| A,D | FR-A-2 395 873 (LEBOIME) <br> * Page 1, lignes 17-26 * | 6,7 | |

DOMAINES TECHNIQUES
RECHERCHES (Int. Cl.5)

B 62 D
F 16 H

Le présent rapport a été établi pour toutes les revendications

| Lieu de la recherche | Date d'achèvement de la recherche | Examinateur |
|---|---|---|
| LA HAYE | 08-12-1989 | MYON G.J-P. |

EPO FORM 1503 03.82 (P0402)